# EUROPÄISCHE PATENTANMELDUNG

(11) **EP 0 739 682 A2**
(43) Veröffentlichungstag der Anmeldung: **30.10.1996**
(21) Anmeldenummer: 96102636.6
(22) Anmeldetag: 22.02.1996
(51) Int. Cl.: B23Q 17/09, B23B 49/00

(54) **Gewindeschneidfutter mit berührungsfreiem Überwachungssystem**

(30) Priorität: 26.04.1995 DE 29507033 U
(71) Anmelder: Emuge-Werk Richard Glimpel Fabrik für Präzisionswerkzeuge (vormals Moschkau & Glimpel), D-91207 Lauf (DE)
(72) Erfinder: Hofmann, Manfred, D-91207 Lauf a.d. Pegnitz (DE)
(74) Vertreter: Matschkur, Götz, Lindner Patent- und Rechtsanwälte

(57) **Zusammenfassung**

Gewindeschneidfutter mit einem Überwachungssystem, bei dem Kräfte, Bewegungen oder Längenänderungen erfaßt und von einer im Futter mit eingebauten Energieversorgung betriebenen Elektronik ausgewertet und ein Signal berührungslos über einen Sender (3) an eine äußere Auswerteeinheit übertragen wird, wobei die Energieversorgung ein von Solarzellen (6) gespeistes Elektrizitätsspeichermedium, vorzugsweise einen Kondensator (2), umfaßt.

## Beschreibung

Die Erfindung bezieht sich auf ein Gewindeschneidfutter mit einem Überwachungssystem, bei dem Kräfte, Bewegungen oder Längenänderungen erfaßt und von einer im Futter mit eingebauten Energieversorgung betriebenen Elektronik ausgewertet und ein Signal berührungslos über einen Sender an eine äußere Auswerteeinheit übertragen wird.

Derartige Gewindeschneidfutter dienen zum Messen von Zerspanungskräften, Verschleiß und Bruch am Werkzeug während der Bearbeitung und damit sowohl zur Gewinnung statistischer Kenndaten und zum Steuern der Maschine an die Leistungsgrenze des Werkzeugs ohne Werkzeugbruch, als auch in Notfällen zum rechtzeitigen Maschinenstopp zur Vermeidung einer "Crash-Situation" und zum frühzeitigen Erkennen des Standzeitendes am eingesetzten Werkzeug. Neben aufwendigen und störanfälligen Funksystemen ist dabei auch bereits vorgeschlagen worden, das Überwachungssystem mit einer Infrarotübertragung zu versehen, die wesentlich störunanfälliger ausgelegt werden kann.

Bei den bislang bekannten Gewindeschneidfuttern mit eingebauten Überwachungssystemen ist grundsätzlich eine Batterie vorgeseheng gewesen, die zur Versorung des Elektronikbauteils und des Senders dient. Diese bekannte Anordnung hat eine Reihe von Nachteilen. So ist zum einen die momentane Batteriekapazität nicht überprüfbar, was zur Folge hat, daß die Batterie in periodisch sich wiederholenden Abständen manuell, durch Zusammendrücken des Längenausgleichs am Futter, überprüft werden muß. Darüber hinaus muß in regelmäßigen Abständen die Batterie ausgetauscht werden, wobei stets die Dichtheit nach dem Austausch gewährleistet sein muß. Schließlich sind die Anschaffungskosten für die Batterien sowie die Entsorgungskosten hierfür zu berücksichtigen und gleichzeitig ins Kalkül zu ziehen, daß eine Batterieüberwachung ebenfalls Energie benötigt, die letztendlich sich wiederum auf die Standzeit der Batterie negativ auswirkt.

Weitere Energieübertragungsarten, wie z.B. eine induktive Einspeisung, die ebenfalls bereits vorgeschlagen worden ist, haben den Nachteil, daß zusätzlich am Umfang oder Teilumfang des Gewindeschneidfutters ein separates Statorteil angebracht werden muß. Die Energieübertragung erfolgt gewindeschneidfutterseitig über ein spezielles Rotorteil. Die Position von Stator und Rotor müssen die gleiche Lage zueinander besitzen, was bedeutet, daß beim Verfahren des Rotors in Längsrichtung der Stator ebenfalls mit bewegt werden muß. Wenn man berücksichtigt, daß in der Praxis bei Bearbeitungszentren eine Vielzahl von Spindeln in geringem Abstand voneinander angeordnet sind, so ist die Anbringung von Statoren und noch dazu ebenfalls längsbeweglichen Statoren nur bedingt möglich.

Der Erfindung liegt daher die Aufgabe zugrunde, ein Gewindeschneidfutter mit berührungslosem Überwachungssystem der eingangs genannten Art so auszugestalten, daß eine einfachere und störungsfreie Energieversorgung gegeben ist.

Zur Lösung dieser Aufgabe ist erfindungsgemäß vorgesehen, daß die Energieversorgung ein von Solarzellen gespeistes Elektrizitätsspeichermedium, vorzugsweise einen Kondensator, umfaßt, wobei die Solarzellen wiederum bevorzugt als Dünnschichtzellen ausgebildet sein können, die auf der Außenumfangsfläche des Futters angeordnet sind.

Im Gegensatz zur den bekannten Anordnungen mit Batterie hat die Aufladung des Elektrizitätsspeichermediums, das ein Akkumulator sein kann, bevorzugt aber als Kondensator ausgebildet ist, den Vorteil, daß ein Austausch der Batterie wegen der ständigen Wiederaufladung nicht nötig ist. Die Aufladung erfolgt bevorzugt durch Verwendung seitlicher stationärer Lampen, an denen sich die Solarzellen vorbeibewegen. Wegen der Nichtbenötigung der Batterie und demzufolge auch des nicht notwendigen Austausches und der nicht notwendigen Wartung einer solchen Batterie hat diese Anordnung auch den Vorteil, daß sie für mehrere Spindeln, auch eng aneinanderliegende Spindeln, geeignet ist und daß das Verfahren des Gewindeschneidfutters wegen der einfachen Ausleuchtbarkeit eines entsprechenden Verfahrbereichs durch die seitlichen Lampen völlig unproblematisch ist und die Energieübertragung nicht beeinträchtigt.

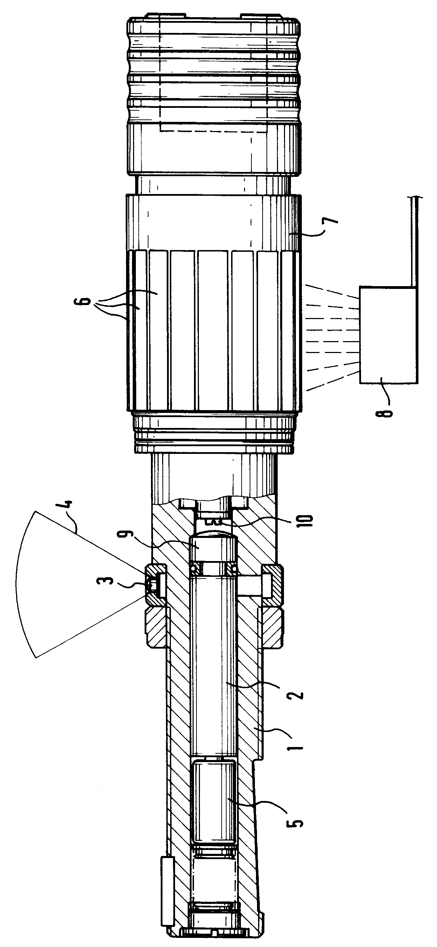

Weitere Vorteile, Merkmale und Einzelheiten der Erfindung ergeben sich aus der nachfolgenden Beschreibung eines Ausführungsbeispiels sowie anhand der Zeichnung, die eine teilweise geschnittene Seitenansicht eines erfindungsgemäßen Gewindeschneidfutters darstellt.

Im verjüngten Schaftabschnitt 1 des in der Figur gezeigten, in seiner sonstigen äußeren Ausgestaltung bekannten und daher nicht näher erläuterten Gewindeschneidfutters ist in an sich bekannter Weise ein Elektronikbauteil 2 eingebaut, welches z.B. die von nicht gezeichneten Dehnungsmeßstreifen od.dgl. aufgenommenen Signale zur Drehmomentmessung auswertet und verarbeitet und einer Infrarotleuchtdiode 3 eines Infrarotsenders zuleitet, der in einem Wirkbereich 4 ein Infrarotsignal ausstrahlt, welches von einem Empfänger einer äußeren Auswerteeinheit aufgenommen werden kann, um in vielfältiger Weise neben der Gewinnung statistischer Daten eine Steuerung der Maschine durchführen zu können, so wie dies bereits eingangs bei der Wiedergabe des Standes der Technik beschrieben worden ist. Erfindungsgemäß ist im dargestellten Ausführungsbeispiel die Energieversorgung durch einen Kondensator 5 gebildet, der von Solarzellen 6 gespeist wird, die an der Außenumfangsfläche 7 des Gewindeschneidfutters angeordnet sind und die von einer Lampe 8 bestrahlt werden. Die elektrische Verbindung der Solarzellen zum Kondensator ist lediglich der Übersichtlichkeit halber in der Zeichnung nicht mit dargestellt.

In der Zeichnung erkennt man darüber hinaus eine Schalteinrichtung, die einerseits durch den Kopf 9 und andererseits durch ein Gegenbauteil 10 gebildet ist, wobei dieses Gegenbauteil 10 bei Längenausgleichsbewegungen des Futters mit verschoben wird, so daß es bei einer entsprechenden Zusammendrückung des Futters schließlich in Kontakt mit dem Kontaktkopf 9 gelangt und somit ein Schaltsignal auslöst. Dieses wird im Elektronikbauteil 2 ausgewertet und ein entsprechendes Signal durch die Infrarotleuchtdiode 3 abgestrahlt.

Die Erfindung ist nicht auf das dargestellte Ausführungsbeispiel beschränkt. Neben einer anderen Anordnung der Solarzellen wäre es auch möglich, anstelle des bevorzugten Kondensators ein anderes Elektrizitätsspeichermedium, beispielsweise einen Akku, zu verwenden.

## Patentansprüche

1. Gewindeschneidfutter mit einem Überwachungssystem, bei dem Kräfte, Bewegungen oder Längenänderungen erfaßt und von einer im Futter mit eingebauten Energieversorgung betriebenen Elektronik ausgewertet und ein Signal berührungslos über einen Sender an eine äußere Auswerteeinheit übertragen wird, dadurch gekennzeichnet, daß die Energieversorgung ein von Solarzellen (6) gespeistes Elektriztiätsspeichermedium, vorzugsweise einen Kondensator (5), umfaßt.

2. Gewindeschneidfutter nach Anspruch 1, dadurch gekennzeichnet, daß die Solarzellen (6) als Dünnschichtzellen auf der Außenumfangsfläche (7) des Futters angeordnet sind.

3. Gewindeschneidfutter nach Anspruch 1 oder 2, dadurch gekennzeichnet, daß zur Versorgung der Solarzellen neben diesen angeordnete stationäre Lampen (8) vorgesehen sind.

4. Gewindeschneidfutter nach einem der Ansprüche 1 bis 3, dadurch gekennzeichnet, daß der Sender eine Infrarot-Leuchtdiode (3) enthält.

5. Gewindeschneidfutter nach einem der Ansprüche 1 bis 4, dadurch gekennzeichnet, daß es eine Einrichtung zum Messen des Drehmoments enthält.

6. Gewindeschneidfutter nach einem der Ansprüche 1 bis 4, dadurch gekennzeichnet, daß eine Schalteinrichtung vorgesehen ist, die bei einer Längenausgleichsbewegung des Futters ein Schaltsignal auslöst.
